# EUROPEAN PATENT SPECIFICATION

(11) **EP 0 470 171 B1**
(45) Date of publication and mention of the grant of the patent: **04.12.1996**
(21) Application number: 90907557.4
(22) Date of filing: 19.04.1990
(51) Int. Cl.: C08F 4/654, C08F 4/649, C08F 10/06

(54) **POLYMERIZATION PROCESS AND CATALYST**
POLYMERISIERUNGSVERFAHREN UND -KATALYSATOR
PROCEDE ET CATALYSEUR DE POLYMERISATION

(30) Priority: 25.04.1989 US 342832
(43) Date of publication of application: 12.02.1992
(73) Proprietor: SHELL OIL COMPANY, Houston, Texas 77252-2463 (US)
(72) Inventor: JOB, Robert, C., Houston, TX 77077 (US)
(74) Representative: Cresswell, Thomas Anthony
(86) International application number: PCT/US90/02036
(87) International publication number: WO 90/12816

(56) References cited:
- EP-A- 0 290 149
- US-A- 3 240 773
- US-A- 3 534 006
- US-A- 4 107 413
- US-A- 4 393 182
- US-A- 4 710 482
- US-A- 4 754 006
- US-A- 5 270 276
- No further relevant documents have been disclosed.

## Description

### Field of the Invention

This invention relates to the production of elastomeric, primarily stereoregular polyolefins, to a process of producing such polymers and to a catalyst useful in such a process.

### Background of the Invention

Several U.S. patents, to Natta, e.g., U.S. 3,112,300 and U.S. 3,112,301, describe steric structural types for polypropylene and other poly-α-olefins wherein the α-olefin has 3 or more carbon atoms. Using polypropylene as an example, a polypropylene is termed "isotactic" if the methyl groups are all aligned on the same side of the straight polymer chain. If the methyl groups alternate from one side of the chain to the other, the polymer is termed "syndiotactic." These two forms containing a regular steric arrangement of methyl groups, taken together, are generically termed "stereoregular." In contrast, a polypropylene in which the methyl groups are randomly arranged on both sides of the polymer chain is termed "atactic" or "stereo-irregular."

The two more conventionally encountered physical forms of polyolefin polymers such as polypropylene are crystalline and amorphous, which terms refer to the crystalline character, or lack thereof, of the polymer. It is known, for example, that crystalline polypropylene is of either the isotactic or syndiotactic structure and amorphous polypropylene is generally of the atactic structure. Polyolefins such as polypropylene which have elastomeric properties are somewhat different. U.S. Patent 4,335,225 discloses a fractionable elastomeric polypropylene which is said to have an isotactic content of 55% or less and also contain some syndiotactic and also some atactic structure. This patent and other patents directed to the catalyst used to produce the elastomeric polymer contain considerable information on the nature of the elastic-type polyolefins. A number of earlier U.S. Patents, e.g. U.S. 3,175,999, U.S. 3,257,370 and U.S. 3,258,455, had disclosed polypropylene having elastomeric properties. Another earlier U.S. Patent, U.S. 3,278,512, had disclosed primarily isotactic polypropylene polymers h'aving elastomeric properties. Syndiotactic polypropylene historically has involved a somewhat different method of production but such is known from U.S. 3,335,121 and U.S. 3,364,190, for example. A catalyst composition useful for the production of high molecular weight rubbery material from propyleneis disclosed in U.S. 3,329,741.

EP-A-290149 discloses a particulate catalyst for olefin polymerisation which comprises:
a) a procatalyst made from a specific form of magnesium oxy compound with a transition metal compound such as titanium tetrachloride and, optionally, a Lewis base, preferably an acid, ester or organo-silicon compound,
b) an organic compound of a non-transition metal of Group I to IV of the Periodic Table such as an organic aluminium compound and
c) optionally a Lewis base which is preferably an ester or an organic silicon compound.

Almost all of the polypropylene which is used commercially is crystalline isotactic polypropylene. Of lesser commercial importance is atactic polypropylene, in part because of its lack of strength. It would be of advantage to provide an improved process for the production of polyolefin polymers, wherein the olefin is an alpha-olefin of at least 3 carbon atoms, which are elastomeric and primarily stereoregular.

### Summary of the Invention

The present invention provides a process for the production of elastomeric, primarily stereoregular polymers of alpha-olefin of at least 3 carbon atoms and to the catalysts useful in the process. More particularly, the invention provides a process for the production of such polymers which employs a catalyst formed from (1) the product of reaction between a magnesium oxy compound and a tetravelent titanium halide in the presence of an electron donor which is not a silane, (2) an organoaluminium compound and (3) a selectivity control agent which is an aromatic heterocyclic nitrogen compound selected from:
(i) an aromatic heterocyclic nitrogen compound in which each carbon atom attached to each heterocyclic nitrogen atom either forms part of a fused aromatic ring or is substituted by a methyl group, there being at least one such carbon atom substituted by a methyl group; or
(ii) an aromatic heterocyclic nitrogen compound containing adjacent to a heterocyclic nitrogen atom at least one carbon atom which is either unsubstituted or substituted by a chlorine atom or methoxy group, or forms part of a fused aromatic ring in which case no methyl group is attached to any carbon atom adjacent to a heterocyclic nitrogen atom.

In the present invention, the choice of selectivity control agent will largely determine the degree of elastomeric character and the nature of the stereoregularity exhibited by the elastomeric, primarily stereoregular polyolefin.

The polyolefin polymers of the invention are polymers of alpha-olefins of at least 3 carbon atoms. The preferred class of alpha-olefins comprises propylene and butylene and particularly preferred is propylene. Largely for convenience, the invention will be illustrated in terms of propylene polymers although it should be understood that the invention is also applied to polymers of other alpha-olefins of at least 3 carbon atoms. The "normal" well-known polypropylenes are generally high molecular weight materials which consist of blocks of monomer units of relatively or extremely long average block length (L) and which are isotactic (<L iso>), for example having 50 to 200 monomer units. The prior art isotactic polymers which are prepared with a supported magnesium halide catalyst are of short average isotactic block length, e.g., from about 6 to about 15 monomeric units, but normally contain a wide distribution of polymer blocks of varying length. These prior art polymers are characterized by having relatively low tensile strength and by being tacky to the touch.

The polyolefins produced by the process of the present invention are characterized by having a narrow distribution of relatively short block lengths, by having relatively high tensile strength and by being non-tacky to the touch. By "block lengths" is meant the number of recurring monomer units, for example, propylene units, which on the average occur before there is a defect in the polymer chain. By "defect" is meant that the symmetry of the recurring units is ended and there are units of a different structure. By way of specific illustration, a block length of isotactic units is ended by the presence of a syndiotactic unit or units in the polymeric chain. It is thought likely that the average block length, as determined by a numerical integration of the pentads which occur in the ¹³C-NMR spectrum, has a great effect on the properties of the polymer. For example, a relatively short block length of from about 7 to about 15 monomer units tends to be found in a flexible or rubbery polymer which exhibits good elastomeric properties and is relatively strong with a tensile strength of from about 1500 psi (10.34 MPa) to about 3000 psi (20.68 MPa). Alternatively, block lengths of greater than about 50 are characteristic of very stiff, highly crystalline isotactic polypropylene of the commercial type.

The process disclosed by the above U.S. 4,335,225 produces an elastomeric polypropylene having up to 55% and preferably less of isotactic polypropylene. The process requires a zirconium or hafnium catalyst supported on partially hydrated alumina. These catalysts exhibit extremely low productivities, of the order of 1% to 2% of the productivity of the catalysts of the present invention, and are not used commercially to any appreciable extent.

The polyolefins are produced in the present invention in the presence of a catalyst derived from a procatalyst of a type which is well known. This procatalyst is the reaction product of a magnesium oxy compound of the formula MgR₁R₂, wherein R₁ is alkoxy or aryloxy, e.g. ethoxy, and R₂ is alkyl, aryl, alkoxy, aryloxy or halogen, preferably alkoxy, aryloxy or halogen, e.g. ethoxy and a tetravalent titanium halide, which reaction takes place in the presence of an electron donor and, preferably, a halogenated hydrocarbon. Such procatalysts, also termed solid catalyst components, are conventional and commercial. The olefin polymerization catalyst is formed from this procatalyst, an organoaluminum compound and an aromatic heterocyclic nitrogen compound as selectivity control agent.

Examples of magnesium oxy compounds useful as precursors of the procatalyst are alkoxy or aryloxy magnesium halides such as isobutoxymagnesium chloride, ethoxymagnesium bromide, phenoxymagnesium iodide, cumyloxymagnesium bromide, naphthoxymagnesium chloride and Mg₄(OCH₃OH)₆(CH₃OH)₁₀Cl₂. Other magnesium diaryloxides such as magnesium diisopropoxide, magnesium diethoxide, magnesium dibutoxide, magnesium diphenoxide, magnesium dinaphthoxide and ethyoxymagnesium isobutoxide. Magnesium compounds as disclosed in U.S. 4,710,482 are preferred, especially Mg₄(OCH₃)₆(CH₃OH)₁₀X₂ wherein X is a resorcinol or substituted resorcinol monoanion. Also useful are magnesium compounds which have one alkyl or aryl group and one alkoxy or aryloxy group. Examples of these compounds are phenylmagnesium phenoxide, ethylmagnesium butoxide, ethylmagnesium phenoxide and naphthylmagnesium isoamyloxide.

The reaction of the magnesium oxy compound and the tetravalent titanium halide, conventionally termed a halogenation reaction, produces a magnesium halide in which the atomic ratio of halogen to magnesium is at least 1.2. Preferred reaction products are those in which the halogenation proceeds more completely, i.e., the reaction product has an atomic ratio of halogen to magnesium of at least 1.5. Except in those instances wherein the magnesium compound contains a phenoxide moiety, e.g., a resorcinol moiety, the most preferred reactions produce a fully halogenated reaction product. The halogenation reactions suitably employ a molar ratio of magnesium compound to titanium compound of from 0.005:1 to 2:1, preferably from 0.01:1 to 1:1. The halogenation reaction, as stated, takes place in the additional presence of an electron donor and, optionally, a halohydrocarbon diluent.

Suitable tetravalent titanium halides are titanium tetrahalides or the corresponding compounds of one or two alkoxy or aryloxy substituents and three or two halide moieties, respectively. Illustrative of these latter titanium halides are dihexanoxytitanium dichloride, diethoxytitanium dibromide, isopropoxytitanium triiodide and phenoxytitanium trichloride. The titanium tetrahalides are particularly preferred, especially titanium tetrachloride.

The reaction of the magnesium compound and the tetravalent titanium compound in conducted in the presence of an electron donor. Suitable electron donors include ethers, esters, ketones, phenols, amines, amides, imines, nitriles, phosphines, phosphites, stibines, arsines, phosphoramides and alcoholates. Examples of suitable electron donors are those disclosed in U.S. 4,442,276. The preferred electron donors are esters of aliphatic and aromatic carboxylic acids, particularly acids of two carboxyl groups. Illustrative esters include dimethyl carbonate, dimethyl adipate, dimethyl fumarate, dibutyl maleate, ethylisopropyl oxalate, diethyl phthalate and diisobutyl phthalate. The most preferred electron donors of the halogenation reaction are dialkyl phthalates.

Suitable halohydrocarbons useful as the optional component of the halogenation reaction include aliphatic halides and aromatic halides. Aliphatic monohalides such as butyl chloride and amyl chloride are suitable but preferred aliphatic halides have from 1 to 12 carbon atoms per molecule, preferably from 1 to 9 carbon atoms per molecule, and at least two halogen atoms. Illustrative of such preferred aliphatic halohydrocarbons are dibromomethane, trichloromethane, 1,2-dichloroethane, dichlorobutane, 1,1,1-trichloroethane, trichlorocyclohexane, dichlorofluoroethane, trichloropropane, trichlorofluorooctane, dibromodifluorodecane, hexachloroethane, carbon tetrachloride and tetrachloroisooctane. The preferred aliphatic halohydrocarbons are carbon tetrachloride and 1,1,1-trichloroethane. Suitable aromatic halohydrocarbons include chlorobenzene, bromobenzene, dichlorobenzene, dichlorodibromobenzene, chloronaphthalene, chlorotoluene and dichlorotoluene. The preferred aromatic halohydrocarbons are chlorobenzene and dichlorobenzene, especially chlorobenzene.

The halogenation typically results in the production of a solid reaction product which, in one embodiment, is isolated from the product mixture by filtration, decantation or other conventional procedure. The product is suitably washed with inert hydrocarbon as described below to remove any unreacted, absorbed material. In a preferred embodiment, however, the initial reaction product is contacted with additional tetravalent titanium halide which is the same or is a different tetravalent titanium halide from that previously used. For this contacting also, the preferred tetravalent titanium halide is a titanium tetrahalide, particularly titanium tetrachloride. This contacting serves to increase the halide content of the solid catalyst component. The halide content is preferably greater than 90% of the ionic equivalents of magnesium plus titanium in the solid catalyst component. This contacting is suitably conducted at a temperature of from 60°C to 136°C over a period of 0.1 hour to 6 hours in the option presence of an inert hydrocarbon diluent. The contacting, conducted with one or with several portions of tetravalent titanium halide, is preferably effected at a temperature of from 70°C to 120°C with a'contact time of about 0.5 hour to about 3.5 hours. After the treatment with tetravalent titanium halide, the solid catalyst component, i.e., the procatalyst, is isolated from the media of its production by conventional methods and washed to remove unreacted titanium compounds. The titanium content of the final, washed, catalyst component is suitably up to about 4.5% by weight and preferably from 1.5 to 3.6% by weight. The product contains magnesium and titanium species, preferably present as predominantly the chlorides.

The material employed to wash to solid catalyst component is typically an inert, light hydrocarbon diluent. The hydrocarbon is aliphatic, alicyclic or aromatic but is preferably an aliphatic hydrocarbon such as isopentane, n-hexane and isooctane. Isopentane is particularly preferred. The qantity of light hydrocarbon to be used is usually from 5 cc to 100 (5 ml to 100 ml) per gram of procatalyst in each of from 2 to 6 separate washes and preferably about 25 cc (25 ml) hydrocarbon per gram of procatalyst in each wash. The resulting solid product is the procatalyst from which, together with the organoaluminum compound (cocatalyst) and selectivity control agent, the polymerization catalyst is formed.

The organoaluminum compound cocatalyst is usefully any of the known aluminum-containing activators in olefin polymerization catalysts which are based on a titanium halide including dialkylaluminum halides or alkylaluminum dihalides. Preferably, however, the organoaluminum compound is halide free and best results are obtained if at least the major proportion off the organoaluminum compound is a trialkylaluminum wherein each of the alkyl groups has 1 to 6 carbon atoms. Trimethylaluminum, triethylaluminum, tri-n-propylaluminum, tri-i-propylaluminum, tri-i-butylaluminum and dibutylamylaluminum are illustrative. The trialkylaluminum is, on occasion used in combination with an alkylaluminum halide, e.g., diethylaluminum chloride, but preferably the sole organoaluminum compound is a trialkylaluminum.

The organoaluminum compound is used in combination with a selectivity control agent which is provided separately or in combination (complex) with the organoaluminum compound. The selectivity control agent is generally employed in an amount of from 1 mol to 100 mols per mol of titanium compound of the procatalyst, preferably from 10 mols to 80 mols per mol of titanium compound. In the present invention, the choice of selectivity control agent will largely determine the degree of elasticity and the stereoregular character of the polyolefin product produced in the process which utilizes the olefin polymerization catalyst.

The aromatic heterocyclic nitrogen compounds which are employed in the process of the invention are those where at least one nitrogen is not unduly hindered by the presence of substituent groups on adjacent carbon atoms, e.g., the nitrogen is unhindered by the presence of substituent groups on adjacent carbon atoms or is "effectively" hindered by such groups. By the term "effective" hindrance is meant steric hindrance by substituent groups located on adjacent carbon atoms which are not so bulky as to prevent the formation of an elastomeric, primarily stereoregular polyolefin. Without wishing to-be bound by any particular theory, it is considered likely that if the substituent groups are too bulky, the aromatic heterocyclic nitrogen compound will not be able to coordinate with other components of the catalyst system and will not provide stereochemical control. Such heterocyclic nitrogen compounds are ones in which at least one carbon atom adjacent to a heterocyclic nitrogen atom is either an aromatic heterocyclic compound containing adjacent to a heterocyclic nitrogen atom at least one carbon atom which is either unsubstituted or substituted by a chlorine arom or methoxy group, or forms part of a fused aromatic ring in which case no methyl group is attached to any carbon atom adjacent to a heterocyclic nitrogen atom.

In one embodiment of the invention the selectivity control agent is an unhindered aromatic heterocyclic nitrogen compound and the catalyst prepared therewith serves to produce elastomeric, primarily isotactic polymers according to the process of the invention. The aromatic heterocyclic nitrogen compound is effectively unhindered when at least one heterocyclic nitrogen atom is substituted on at least one adjacent carbon atom with a hydrogen.

Thus, the use of pyridine or pyridazine as a selectivity control agents produces the elastomeric, primarily isotactic polypropylene as does a substituted pyridine substituted by other than hydrogen on one adjacent carbon atom, e.g., acridine. Alternatively, use of a compound containing a methyl group substituent on the available carbon atom adjacent to the nitrogen, eg quinaldine, does not result in the production of primarily isotactic polymer. The presence of a bulky substituent on each adjacent carbon atom, e.g., 2,6-di-t-butylpyridine, does not result in production of primarily stereoregular product. Other unhindered aromatic heterocyclic nitrogen compounds are pyrazine, 3,4,5-trichloropyridazine, 1,3,5-triazine, phenazine, 2,5-dimethylpyrazine, 2,6-dimethylpyrazine, quinazoline, 2-picoline, quinoline, 2,3-dichloroquinoraline 2-methylpyrazine 4,6-dichloropyrimidine, and 2,4-dichloropyrimidine.

In a second embodiment of the invention, the selectivity control agent is a less effectively hindered aromatic heterocyclic nitrogen compound wherein at least one of the substituents on the adjacent carbon atoms of each nitrogen provide some degree of hindrance but such hindrance is insufficient to prevent the production of elastomeric, primarily isotactic polymer. Such substituents are methoxy, chloro or a portion of a fused aromatic ring. Illustrative of such aromatic heterocyclic nitrogen compounds are 2,6-dichloropyridine, 2-chloroquinoline, 2-chloro-6-methoxypyridine 2,4,6-trichloropyrimidine and 2,4,5,6-tetrachloropyrimidine.

In the third embodiment of the invention the selectivity control agent is an effectively hindered aromatic heterocyclic nitrogen compound wherein the steric hindrance arises from the presence of substituents on the carbon atoms adjacent to each nitrogen atom are hindered by groups other than chloro or methoxy or a fused aromatic ring. In such compounds each carbon atom attached to each heterocyclic nitrogen atom either forms part of a fused aromatic ring or is substituted by a methyl group, there being at least one such carbon atom substituted by a methyl group. Use of a catalyst formed from, inter alia, such a selectivity control agent results in the formation of an elastomeric,' primarily stereoregular polymer which in this embodiment is a syndiotactic polymer. Illustrative of this class of aromatic heterocyclic nitrogen compounds are 2,6-lutidine, 2,4,6-collidine, 2,3-dimethylquinoxaline, quinaldine and tetramethylpyrazine.

To prepare the final polymerization catalyst, the procatalyst, cocatalyst and the selectivity control agent are simply combined, preferably employing the components in quantities sufficient to provide in the catalyst an atomic ratio of aluminum to titanium of from 1 to 150, particularly from about 10 to about 150, although higher ratios may be used. In general, an increase in the ratio of aluminum to titanium results in greater catalyst activity but leads to increased catalyst residues in the unextracted product. The atomic ratio will vary depending upon the process and product desired. Atomic ratios of aluminum to titanium from 30 to 100 are most advantageous, particularly ratios from 50 to 80.

Polymerization of the α-olefins such as propylene according to the invention can be conducted in a liquid system with a diluent such as a paraffinic liquid of 3 to 15 carbon atoms per molecule or in a liquid system containing propylene as the dilent employed alone or in combination with a small amount of propane. Liquid-phase propylene polymerization is conducted at a temperature of 50°C to 80°C and a pressure sufficient to maintain liquid conditions. The process is suitably conducted batchwise but preferably is effected by a continuous reaction. In the latter system the liquid in the reaction zone is maintained at reaction conditions, monomer is continuously charged to the reaction zone, catalyst components are also charged continuously or at frequent intervals and reaction mixture containing polymer is withdrawn from the reaction zone continuously or at frequent intervals. Under these conditions, the polymer is produced as a slurry in the reaction mixture and is recovered by conventional methods and the reaction mixture is suitable for recycle. The catalyst of the invention is sufficiently active and specific in propylene polymerization so that removal of catalyst residues or atactic polymer from the polypropylene product is not required. The process and catalyst are particularly suited for operation in a continuous liquid phase reaction but alternatively are useful in a batchwise liquid phase process or in a vapor phase reaction.

It is well known that supported coordination procatalysts and catalyst systems of the type used in the present process are highly sensitive, in varying degrees, to catalyst poisons such as moisture, oxygen, oxides of carbon, polyolefins, acetylenic compounds and sulfur compounds. It should be understood that in the practice of the invention both the physical equipment and the reactants and diluents are carefully dried and free of catalyst poisons.

The polymer products obtained according to the process of the invention are elastomeric, primarily stereoregular poly-α-olefins derived from olefins of at least 3 carbon atoms. The polymers are characterized by the presence of a narrow distribution of relatively short block lengths and relatively high tensile strength. They are distinguished from other polyolefins by the combination of elastomeric properties and strength.

The invention is further illustrated by the following Examples which should not be regarded as limiting. In the examples, the productivity of the procatalyst is determined as kg polymer/g procatalyst in a standard one hour batch reaction. Catalyst activity is sometimes reported as kg polymer/g procatalyst hr or kg polymer/g Ti hr. The specificity towards the production of stereoregular polymers, either syndiotactic or isotactic, is determined by measurements involving the pentads observed in the ¹³C-NMR spectrum. See Randall, "Polymer Sequence Determination, Carbon-13 NMR Method," Academic Press, N.Y., 1977. A relationship has been determined to estimate the average block length by measuring the amount of xylene soluble polymer (XS) in accordance with regulations of the U.S. Food and Drug Administration. A XS test is conducted by dissolving a polymer sample is xylene in a stirred flask at 120°C. The flask is then immersed in a water bath at 25°C without stirring for 1 hour, during which the insoluble portion precipitates. The precipitate is removed by filtration and the solubles present in the filtrate are determined by evaporating a 20 ml aliquot of the filtrate, drying the residue under vacuum and weighing the residue. The xylene soluble content increases for short block length material and may include some amorphous or low molecular weight crystalline material. See FDA regulations 121.2501 and 121.2510, 1970. The desirable numerical value for polypropylene polymers produced according to the invention is between about 35% and about 85%.

### Preparation of Procatalysts

Procatalyst A: Magnesium methoxide solution (12%) was prepared by dissolving magnesium metal in methanol containing 0.125 equivalent of tetraethoxysilane (TEOS) and then filtering through a medium porosity fritted glass filter to remove the slight amount of grey suspension.
   The magnesium methoxide solution (791 g, 1.10 mol) was added slowly, at 60°C, to a solution of resorcinol (60.5 g, 0.55 mol) in methanol (175 g) while stirring at 450 rpm with a 3-inch (1.6 cm) wide, curved teflon® paddle of 1.5 in² (9.67 cm²) surface area. By the time one-third of the methoxide had been added the flocculant precipitate had gotten quite viscous so another 155 g of methanol was added. After addition was complete the reaction was stirred for an hour then filtered. The solids were washed with methanol then isooctane then dried under moving nitrogen to yield crystalline cylindrical rods of formula: Mg₄(OCH₃)₆(CH₃OH)₁₀(resorcinolate)₂. Partial desolvation of this precursor was carried out by boiling 40 g of solids in 300 g of cyclohexane, containing 120 g of tetraethoxysilane, until the volume had decreased by 20-30%.
   The procatalyst was prepared by stirring 7.8 g of the partially desolvated precursor in 200 ml of a 50/50 (vol/vol) mixture of TiCl₄/chlorobenzene. After adding isobutylphthalate (2.5 ml, 8.7 mmol) the mixture was heated in an oil bath and stirred at 115°C for 60 minutes. The mixture was filtered hot and the solids slurried in 200 ml of fresh TiCl₄/chlorobenzene mixture. Phthaloyl chloride (0.5 ml, 3.4 mmol) and p-toluoyl chloride (0.5 ml, 3.7 mmol) were added and the mixture stirred at 115°C. After 60 minutes the mixture was filtered hot and the solids slurried again into 200 ml of fresh TiCl₄/chlorobenzene mixture, heated at 115°C for 30 minutes and filtered hot. The solids were then slurried into 200 ml of fresh TiCl₄/ chlorobenzene mixture, heated at 115°C for 30 minutes and filtered hot. The solids were then slurried into 100 ml of fresh TiCl₄/chlorobenzene mixture, heated at 115°C for 10 minutes and filtered hot. The solids were allowed to cool then washed with six 150 ml portions of isopentane and dried for 100 minutes under moving nitrogen at 40°C. Ti=2.54%.
Procatalyst B: Magnesium ethoxide (8.2 g, 72 mmol) was slurried in 200 ml of 50/50 (vol/vol) TiCl₄/chlorobenzene and then isobutyl phthalate (2.5 ml, 8.5 mmol) was added at room temperature. The gently stirring mixture was heated to 110°C and held for 1 hour. The mixture was filtered hot and then another 200 ml of the TiCl₄/chlorobenzene mixture was added along with phthaloyl chloride (0.42 ml, 2.9 mmol) and ethyl benzoate (0.37 ml, 2.6 mmol) and the gently stirring slurry was held at 110°C for another 1.0 hour and filtered hot. The solids were slurried in one final 200 ml portion of the TiCl₄/chlorobenzene solvent mix and stirred gently for 0.5 hour at 110°C. The mixture was filtered hot and then allowed to cool to 40°C before washing with-six 150 ml aliquots of isopentane. The resulting powder was dried for 100 minutes under moving nitrogen at 40°C. The yield is 9 g of procatalyst. Ti=2.70%.
Procatalyst C: Magnesium (104 g, 4.28 mol) was added portionwise to a mixture of 1.2 liters of methanol and 130 ml TEOS in a 3-liter-3-neck flask. Overnight stirring yielded a crystalline slush from which no solvent could be decanted. 1500 ml of TEOS was added as the slush was gently broken up with a spatula to produce a thick milky slurry which turned cold while stirring and turned white and thickened over an hour of stirring. The extremely thick slurry was diluted in two steps: 66% was diluted with 700 ml TEOS and 33% of that was diluted to 21 with TEOS to provide a milky slurry containing the equivalent of 22 g magnesium.
   This slurry was heated gradually to a pot temperature of 153°C as distillate was collected over a 2 hour period. Microscopic examination revelated glassy granular particles in a narrow size distribution around 15 µm.
   The granular particles (8.2 g, 56 mmol) were slurried in 200 ml of a 50/50 (vol/vol) mixture of TiCl₄/chlorobenzene. After adding isobutylphthalate (2.5 ml, 8.7 mmol) the mixture was heated in an oil bath and stirred at 110°C for 60 minutes. The mixture was filtered hot and the solids slurried in 200 ml of fresh TiCl₄/chlorobenzene mixture. Phthaloyl chloride (0.42 ml, 2.9 mmol) and ethyl benzoate (0.37 ml, 2.6 mmol) were added and the mixture stirred at 110°C. After 60 minutes the mixture was filtered hot and the solids slurried again into 200 ml of fresh TiCl₄/chlorobenzene mixture. The slurry was stirred for 30 minutes at 110°C then filtered hot. The solids were allowed to cool to 40°C and then washed with six 150 ml portions of isopentane and dried for 100 minutes under moving nitrogen at 40°C. The yield was 8.0 g of pink procatalyst. Analysis: 2.55% Ti.
Procatalyst D: Prepared from 330 lb (149.7 kg) of Mg(OEt)₂ using the same procedure and molar ratios as described for procatalyst B. Ti=2.77%.

### Examples 1-5

Procatalysts were used as a 5% slurry in mineral oil. Triethylaluminum (TEA) was used as a 0.28 M solution in isooctane, diethylaluminumchloride (DEAC) was used as a 1.54 M solution in heptane and tetramethylpyrazine was used as a 12% solution in isooctane. Examples 1-4 illustrate the effect of using tetramethylpyrazine as selectivity control agent (SCA) with four procatalysts (A-D above). Example 5 is a comparative example in which the tetramethylpyrazine had been omitted.

Triethylaluminum (1.2 mmol) and tetramethylpyrazine (0.24 mmol) were mixed together and then an amount of procatalyst slurry containing 0.012 mmol Ti was mixed with that. After 20 minutes, 0.60 ml of DEAC was added to produce the total catalyst mixture. TEA (1.4 mmol) was then injected to 2.7 liters of propylene in a rapidly stirring 1 gallon (4.56 liter) stainless steel autoclave at 65°C followed by the total catalyst mixture and polymerization was carried out for about 200 minutes at 65°C. After evaporation of excess propylene and cooling to room temperature the polymers were removed as a lump from the reactor then cut into pieces and allowed to dry overnight in a fume hood prior to characterization.

The productivities, the xylene solubles content and the bulk polymer composition (as determined by NMR spectroscopy) for rubbery polymers of Examples 1-4 are listed in Table 1. This polymer is primarily syndiotactic.

The pertinent properties for the polymers are shown in Table 2. Note that the tensile set values indicate that the primarily syndiotactic polymers of Examples 1, 3 and 4 are highly elastic (Tset, after stretching to 300% length, of only 22-28%) whereas the primarily isotactic control case of example 5 is not as elastic (Tset of 120%).

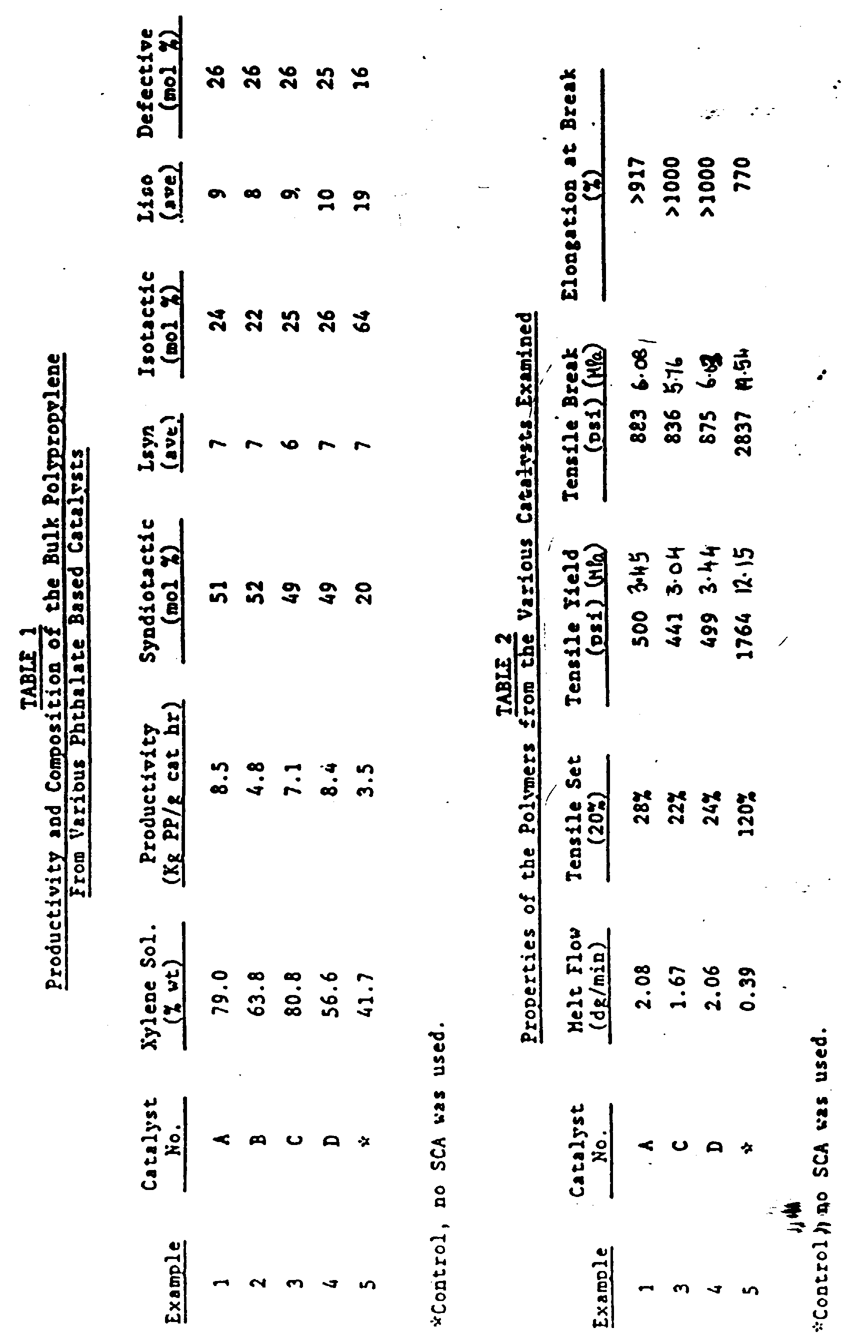

### Examples 6-16 (SCA's producing primarily syndiotactic polymer)

The only cocatalyst used was triethylaluminum as a 0.28 molar solution in isooctane. A 0.20 mmol sample of the selectivity control agent, 0.01 mmol of the procatalyst and 0.7 mmol of the cocatalyst were mixed together and after 20 minutes were injected into 2700 ml of liquid propylene in a reactor where the polymerizations were carried out for 90 minutes at 60°C. Procatalyst A was used throughout.

### ¹³C Magnetic Resonance

Spectra were obtained at 135°C on samples dissolved in 1,2,4-trichlorobenzene. The spectrum reference was the mmmm methyl group assigned at 21.68 ppm. The calculated results of % syndiotactic, % isotactic, % defective and the respective average block lengths, for the boiling isooctane fractionated polymer are shown in Tables 3 and 4.

### Tensile Properties

In order to prepare samples for tensile measurements, about 60 g of the polymer was blended in a Brabender mixer at 190°C with 0.3 g of IRGANOX®1010 antioxidant. After cooling, a 15.2 cm x 15.2 cm x 2 mm plate was compression molded at 204°C under 5 tons (4540 kg) pressure. Tensile bars were then cut from the plate using a 'C' die. The measurement conditions are as described in ASTM D 412-83. Tensile set is the residual elongation imparted to a sample after stretching to an increase of 300% over its original length at a rate of 50.2 cm/minute and then allowing it to recover to zero load at that same rate. Tensile yield is the stress required to induce a permanent deformation in the sample. Tensile at break is the stress required to break the sample at an elongation rate of 50.2 cm/minute. Elongation at break is the measured elongation at the break condition.

Melt flow index was determined under condition L (2160 g, 230°C) on a Tinius Olsen Plastometer. The strands, which were formed by extrusion through the 3mm die of-the melt flow device, were stretched to an equilibrated length by hand pulling to nearly the break point several times. The stretch values given in Tables 3 and 4 are reported as the percentage elongation obtained upon applying a force nearly enough to break the strand (after which, of course, the strand returns to its equilibrated length). This measurement is essentially equivalent to the reversible elastic elongation described by G. Natta et al in U.S. 3,175,999.

Table 5 shows the tensile properties for certain of the polymers produced.

**TABLE 3**

| (Less Hindered Heterocycles) | | | | | | | | |
|---|---|---|---|---|---|---|---|---|
| Example | SCA | % Syn | Lsyn | % iso | Liso | Lave | X.S. (%) | Stretch |
| 5 | None | 22 | 6.7 | 60 | 14 | 12.0 | 42.4 | 20% |
| 6 | 2-picoline | 19 | 6.3 | 62 | 14 | 12.2 | 49.4 | 9% |
| 7 | Quinoline | 21 | 6.7 | 61 | 15 | 12.9 | 44.4 | 14% |
| 8 | 2,3,5-trimethyl pyrazine | 12 | 6.9 | 77 | 25 | 22.6 | 23.1 | 10% |
| 9 | Phenazine | 21 | 7.0 | 62.5 | 17 | 14.5 | 36.4 | 14% |
| 10 | Acridine | 18 | 6.8 | 64 | 17 | 14.8 | 31.0 | 21% |

**TABLE 4**

| (Hindered Heterocycles) | | | | | | | | |
|---|---|---|---|---|---|---|---|---|
| Example | SCA | % Syn | Lsyn | % iso | Liso | Lave | X.S. (%) | Stretch |
| 11 | 2,6-Lutidine | 54.5 | 8.7 | 25 | 10 | 9.1 | 67.6 | 68% |
| 12 | Quinaldine | 52 | 8.9 | 27 | 12 | 10.0 | 62.4 | 110% |
| 13 | 2,3,5,6-Tetramethylpyrazine | 50 | 7.7 | 25 | 9 | 8.1 | 79.1 | 80% |
| 14 | 2,4,6-Collidine | 49 | 8.8 | 30 | 10 | 9.3 | 69.1 | 113% |
| 15 | 2,3-Dimethylquinoxaline | 45 | 8.0 | 34 | 13 | 10.2 | 61.4 | 58% |
| 16 | 2,4-Dimethylquinoline | 42 | 8.4 | 37 | 13 | 10.6 | 61.3 | 78% |

**TABLE 5**

| Tensile Properties | | | | | |
|---|---|---|---|---|---|
| Example | | Tset* | Tyield (psi) | Tbreak (psi) | Elongation @ break % |
| 6 | Iso | 171% | 1289 | 2402 | 843 |
| 10 | Iso | 204% | 1529 | 2893 | 785 |
| 11 | Syndio | 65% | 730 | 1554 | 750 |
| 12 | Syndio Compar | 73% | 822 | 1845 | 769 |
| 13 | Syndio Compar | 52% | 587 | 1114 | 908 |
| 14 | Syndio | 110% | 980 | 1651 | 764 |

| | | | | | |
|---|---|---|---|---|---|
| *Stretch to 400% of original length. | | | | | |

### Examples 17-19

Using two different relatively less hindered heterocyclic selectivity control agent, which are the subject of this invention, and one effectively hindered heterocycle, 1.8 liters of 1-butene was polymerized under the same conditions used above for propylene polymerizations. The NMR results presented in Table 6 show that the less hindered SCAs (Example 14 and Example 15) produce predominantly isotactic polybutylene while the methyl hindered SCA (Example 16) produced primarily syndiotactactic polybutylene. The tensile properties of these examples are shown in Table 7. As with the polypropylene case the polybutenes of the present invention exhibit higher tensile strength and higher tensile set values than the polymer of the more hindered nitrogen heterocycle (i.e., they are only mildly elastomeric).

**TABLE 6**

| Polybutylene | | | | | |
|---|---|---|---|---|---|
| Example | SCA | % Iso | <Liso> | % Syn | <Lsyn> |
| 17 | 2,3,5-trimethylpyrazine | 51 | 12 | 19 | 5.9 |
| 18 | Cyanuric chloride | 68 | 18 | 12 | 5.6 |
| 19 | 2,6-lutidine | 27 | 10 | 38 | 6.9 |

**TABLE 7**

| Polybutene Tensiles | | | |
|---|---|---|---|
| Example | Tensile set | Tensile at break | Elongation at break |
| 17 | 100% | 974 psi | 590% |
| 18 | 158% | 2852 psi | 480% |
| 19 | 30% | >230 psi* | >1000% |

| | | | |
|---|---|---|---|
| *Sample did not break at 1000% elongation. | | | |

## Claims

1. A catalyst for use in the production of an elastomeric, primarily stereoregular poly-α-olefin, wherein the α-olefin has at least three carbon atoms, characterised by short average block lengths of from 7 to 15 monomer units, which catalyst comprises:
a) the product of reaction between a magnesium oxy compound and a tetravalent titanium halide in the presence of an electron donor which is not a silane;
b) an organoaluminium compound; and
c) a selectivity control agent which is an aromatic heterocyclic nitrogen compound selected from:-
(i) an aromatic heterocyclic nitrogen compound in which each carbon atom attached to each heterocyclic nitrogen atom either forms part of a fused aromatic ring or is substituted by a methyl group, there being at least one such carbon atom substituted by a methyl group; or
(ii) an aromatic heterocyclic nitrogen compound containing adjacent to a heterocyclic nitrogen atom at least one carbon atom which is either unsubstituted or substituted by a chlorine atom or methoxy group, or forms part of a fused aromatic ring in which case no methyl group is attached to any carbon atom adjacent to a heterocyclic nitrogen atom.

2. A catalyst according to claim 1, wherein the tetravalent titanium compound is titanium tetrachloride.

3. A catalyst according to claim 1 or 2, wherein the magnesium oxy compound is of the formula MgR₁R₂, wherein R₁ is alkoxy or aryloxy and R₂ is alkyl, aryl, alkoxy, aryloxy or halogen.

4. A catalyst according to claim 3, wherein R₁ and R₂ are ethoxy.

5. A catalyst according to claim 3, wherein the magnesium oxy compound is of the formula Mg₄(OCH₃)₆(CH₃OH)₁₀X₂, wherein X is a resorcinol or substituted resorcinol monoanion.

6. A catalyst according to any one of claims 1 to 5, wherein the nitrogen compound (i) is 2,3-dimethylquinoxaline, quinaldine, 2,6-lutadine, 2,4,6-collidine, 2,4-dimethylquinoline or tetramethylpyrazine.

7. A catalyst according to any one of claims 1 to 5, wherein the nitrogen compound (ii) is 2,6-dichloropyridine, 2-chloroquinoline, 2-chloro-6-methoxypyridine, 2,3-dichloroquinoxaline, 2,4,6-trichloropyrimidine, 2,4,5,6-tetrachloropyrimidine or cyanuric chloride.

8. A catalyst according to any one of claims 1 to 5, wherein the nitrogen compound (ii) is pyrazine, 3,4,5-trichloropyridazine, phenazine, pyridine, 2,6-dimethylpyrazine, quinazoline, 2-methylpyrazine, 2,5-dimethylpyrazine, 1,3,5-triazine, 2,3,5-trimethylpyrazine, acridine, 2,3-dimethylpyrazine, 2,3-dichloroquinoxaline, quinoline, pyridazine, 4,6-dichloropyrimidine, 2-picoline or 2,4-dichloropyrimidine.

9. A catalyst according to any one of the preceding claims wherein the electron donor used in producing component (a) is an ester of an aliphatic or aromatic carboxylic acid.

10. A process for the production of elastomeric, primarily stereoregular poly-α-olefin, wherein the α-olefin is of at least three carbon atoms, characterised by short average block lengths of from 7 to 15 monomer units, which comprises polymerizing the α-olefin in the presence of a catalyst as claimed in any one of the preceding claims.

11. A process according to claim 10, wherein the catalyst comprises an aromatic heterocyclic nitrogen compound (i) and the polymer produced is more syndiotactic than isotactic.

12. A process according to claim 11, wherein said compound (i) is as defined in claim 6.

13. A process according to claim 12, wherein the catalyst comprises an aromatic heterocyclic nitrogen compound (ii) and the polymer produced is more isotactic than syndiotactic.

14. A process according to claim 13, wherein said compound (ii) is as defined in claim 7 or claim 8.

15. A process according to any one of claims 10 to 14, wherein the α-olefin is propylene.

16. A process according to any one of claims 10 to 14, wherein the α-olefin is 1-butene.

## Patentansprüche

1. Katalysator zur Verwendung bei der Herstellung eines elastomeren, primär stereoregulären Poly-α-olefins, wobei das α-Olefin mindestens drei Kohlenstoffatome besitzt, gekennzeichnet durch eine kurze mittlere Blocklänge von 7 bis 15 Monomereinheiten, wobei der Katalysator umfaßt:
a) das Reaktionsprodukt zwischen einer Magnesiumoxyverbindung und einem vierwertigen Titanhalogenid in Gegenwart eines Elektronendonors, der kein Silan ist,
b) eine Organoaluminiumverbindung, und
c) ein die Selektivität kontrollierendes Mittel, das eine aromatische heterocyclische Stickstoffverbindung ist, ausgewählt aus:
(i) einer aromatischen heterocyclischen Stickstoffverbindung, bei der jedes Kohlenstoffatom, das an jedes heterocyclische Stickstoffatom gebunden ist, entweder einen Teil eines kondensierten aromatischen Rings bildet oder substituiert ist durch eine Methylgruppe, wobei mindestens ein solches Kohlenstoffatom durch eine Methylgruppe substituiert ist, oder
(ii) einer aromatischen heterocyclischen Stickstoffverbindung, enthaltend benachbart zu dem heterocyclischen Stickstoffatom mindestens ein Kohlenstoffatom, das entweder unsubstituiert oder durch ein Chloratom oder eine Methoxygruppe substituiert ist oder einen Teil eines kondensierten aromatischen Rings bildet, wobei in diesem Falle keine Methylgruppe an irgendein Kohlenstoffatom gebunden ist, das einem heterocyclischen Stickstoffatom benachbart ist.

2. Katalysator nach Anspruch 1, wobei die vierwertige Titanverbindung Titantetrachlorid ist.

3. Katalysator nach Anspruch 1 oder 2, wobei die Magnesiumoxyverbindung die Formel MgR₁R₂ besitzt, wobei R₁ Alkoxy oder Aryloxy ist und R₂ Alkyl, Aryl, Alkoxy, Aryloxy oder Halogen bedeutet.

4. Katalysator nach Anspruch 3, wobei R₁ und R₂ Ethoxy sind.

5. Katalysator nach Anspruch 3, wobei die Magnesiumoxyverbindung die Formel Mg₄(OCH₃)₆(CH₃OH)₁₀X₂ besitzt, wobei X ein Resorcin-oder substituiertes Resorcinmonoanion ist.

6. Katalysator nach einem der Ansprüche 1 bis 5, wobei die Stickstoffverbindung (i) 2,3-Dimethylchinoxalin, Chinaldin, 2,6-Lutadin, 2,4,6-Collidin, 2,4-Dimethylchinolin oder Tetramethylpyrazin ist.

7. Katalysator nach einem der Ansprüche 1 bis 5, wobei die Stickstoffverbindung (ii) 2,6-Dichlorpyridin, 2-Chlorchinolin, 2-Chlor-6-methoxypyridin, 2,3-Dichlorchinoxalin, 2,4,6-Trichlorpyrimidin, 2,4,5,6-Tetrachlorpyrimidin oder Cyanursäurechlorid ist.

8. Katalysator nach einem der Ansprüche 1 bis 5, wobei die Stickstoffverbindung (ii) Pyrazin, 3,4,5-Trichlorpyridazin, Phenazin, Pyridin, 2,6-Dimethylpyrazin, Chinazolin, 2-Methylpyrazin, 2,5-Dimethylpyrazin, 1,3,5-Triazin, 2,3,5-Trimethylpyrazin, Acridin, 2,3-Dimethylpyrazin, 2,3-Dichlorchinoxalin, Chinolin, Pyridazin, 4,6-Dichlorpyrimidin, 2-Picolin oder 2,4-Dichlorpyrimidin ist.

9. Katalysator nach einem der vorangehenden Ansprüche, wobei der zur Herstellung der Komponente (a) verwendete Elektronendonor ein Ester einer aliphatischen oder aromatischen Carbonsäure ist.

10. Verfahren zur Herstellung von elastomerem primär stereoregulärem Poly-α-olefin, wobei das α-Olefin mindestens drei Kohlenstoffatome enthält, gekennzeichnet durch eine kurze mittlere Blocklänge von 7 bis 15 Monomereinheiten, umfassend das Polymerisieren des α-Olefins in Gegenwart eines Katalysators nach einem der vorangehenden Ansprüche.

11. Verfahren nach Anspruch 10, wobei der Katalysator eine aromatische heterocyclische Stickstoffverbindung (i) umfaßt und das entstandene Polymer stärker syndiotaktisch als isotaktisch ist.

12. Verfahren nach Anspruch 11, wobei die Verbindung (i) wie in Anspruch 6 definiert ist.

13. Verfahrne nach Anspruch 12, wobei der Katalysator eine aromatische heterocyclische Stickstoffverbindung (ii) umfaßt und das gebildete Polymer stärker isotaktisch als syndiotaktisch ist.

14. Verfahren nach Anspruch 13, wobei die Verbindung (ii) wie in Anspruch 7 oder 8 definiert ist.

15. Verfahren nach einem der Ansprüche 10 bis 14, wobei das α-Olefin Propylen ist.

16. Verfahren nach einem der Ansprüche 10 bis 14, wobei das α-Olefin 1-Buten ist.

## Revendications

1. Catalyseur destiné à être utilisé dans la préparation d'une poly-α-oléfine élastomère essentiellement stéréorégulière, l'α-oléfine comportant au moins trois atomes de carbone, caractérisée par une longueur moyenne de séquence courte comprise entre 7 et 15 motifs monomères, lequel catalyseur comprend :
a) le produit de la réaction entre un composé de type magnésium-oxy et un halogénure de titane tétravalent en présence d'un donneur d'électron autre qu'un silane,
b) un composé organoaluminique, et
c) un agent de sélectivité qui est un composé azoté hétérocyclique choisi parmi :
(i) un composé azoté hétérocyclique aromatique dans lequel chaque atome de carbone lié à chacun des atomes d'azote de l'hétérocycle fait partie d'un cycle aromatique condensé ou porte un substituant méthyle, au moins un tel atome de carbone méthylé étant présent dans le cycle, ou
(ii) un composé azoté hétérocyclique aromatique comportant, en position adjacente d'un atome d'azote hétérocyclique, au moins un atome de carbone qui est soit non substitué soit substitué par un atome de chlore ou un groupe méthoxy, soit fait partie d'un cycle aromatique condensé, dans quel cas aucun groupe méthyle n'est lié à un atome de carbone adjacent à un atome d'azote hétérocyclique.

2. Catalyseur conforme à la revendication 1, dans lequel le composé de titane tétravalent est le tétrachlorure de titane.

3. Catalyseur conforme à la revendication 1 ou 2 dans lequel le composé de type magnésium-oxy correspond à la formule MgR₁R₂ où R₁ est un groupe alcoxy ou aryloxy et R₂ est un groupe alkyle, aryle, alcoxy, aryloxy ou halogéno.

4. Catalyseur conforme à la revendication 3, dans lequel R₁ et R₂ sont des groupes éthoxy.

5. Catalyseur conforme à la revendication 3, dans lequel le composé de type magnésium-oxy correspond à la formule Mg₄(OCH₃)₆(CH₃OH)₁₀X₂ où X est un résorcinol ou une forme monoanionique substituée de résorcinol.

6. Catalyseur conforme à une quelconque des revendications 1 à 5, dans lequel le composé azoté (i) est la 2,3-diméthylquinoxaline, la quinaldine, la 2,6-lutadine, la 2,4,6-collidine, la 2,4-diméthylquinoline ou la tétraméthylpyrazine.

7. Catalyseur conforme à une quelconque des revendications 1 à 5 dans lequel le composé azoté (ii) est la 2,6-dichloropyridine, la 2-chloroquinoline, la 2-chloro-6-méthoxypyridine, la 2,3-dichloroquinoxaline, la 2,4,6-trichloropyrimidine, la 2,4,5,6-tétrachloropyrimidine ou le chlorure de cyanuryle.

8. Catalyseur conforme à une quelconque des revendications 1 à 5 dans lequel le composé azoté (ii) est la pyrazine, la 3,4,5-trichloropyridazine, la phénazine, la pyridine, la 2,6-diméthylpyrazine, la quinazoline, la 2-méthylpyrazine, la 2,5-diméthylpyrazine, la 1,3,5-triazine, la 2,3,5-triméthylpyrazine, l'acridine, la 2,3-diméthylpyrazine, la 2,3-dichloroquinoxaline, la quinoline, la pyridazine, la 4,6-dichloropyrimidine, la 2-picoline ou la 2,4-dichloropyrimidine.

9. Catalyseur conforme à une quelconque des revendications précédentes dans lequel le donneur d'électrons utilisé pour la préparation du composant (a) est un ester d'un acide carboxylique aliphatique ou aromatique.

10. Procédé de préparation d'une poly-α-oléfine élastomère essentiellement stéréorégulière, dans laquelle l'α-oléfine comporte au moins trois atomes de carbone, caractérisée par une longueur moyenne de séquence courte comprise entre 7 et 15 motifs monomères, lequel procédé comprend la polymérisation de l'α-oléfine en présence d'un catalyseur conforme à une quelconque des revendications précédentes.

11. Procédé conforme à la revendication 10 dans lequel le catalyseur comprend un composé azoté hétérocyclique aromatique (i) et le polymère préparé est plus syndiotactique qu'isotactique.

12. Procédé conforme à la revendication 11 dans lequel ledit composé (i) est défini comme dans la revendication 6.

13. Procédé conforme à la revendication 12 dans lequel le catalyseur comprend un composé azoté hétérocyclique aromatique (ii) et le polymère préparé est plus isotactique que syndiotactique.

14. Procédé conforme à la revendication 13 dans lequel ledit composé (ii) est défini comme dans la revendication 7 ou 8.

15. Procédé conforme à une quelconque des revendication 10 à 14 dans lequel l'α-oléfine est le propylène.

16. Procédé conforme à une quelconque des revendications 10 à 14 dans lequel l'α-oléfine est le 1-butène.
